# EUROPÄISCHE PATENTSCHRIFT

(11) **EP 3 788 707 B1**
(45) Veröffentlichungstag und Bekanntmachung des Hinweises auf die Patenterteilung: **12.10.2022**
(21) Anmeldenummer: 18734771.1
(22) Anmeldetag: 19.06.2018
(51) Int. Cl.: H02M 1/44, H02M 7/483, H01H 31/00, H02B 1/16, H02B 13/075, H05K 9/00

(54) **POTENTIALAUSGLEICHSYSTEM FÜR EINEN MODULAREN MULTILEVEL-STROMRICHTER**
POTENTIAL EQUALISATION SYSTEM FOR A MODULAR MULTILEVEL CONVERTER
SYSTEME D'ÉQUILIBRAGE DU POTENTIEL POUR UN CONVERTISSEUR MULTINIVEAU MODULAIRE

(43) Veröffentlichungstag der Anmeldung: 10.03.2021
(73) Patentinhaber: Siemens Energy Global GmbH & Co. KG, 81739 München (DE)
(72) Erfinder: ANHEUER, Mathias, 90574 Roßtal (DE); BÖHME, Daniel, 90480 Nürnberg (DE); DALLMEIER, Johannes, 93089 Aufhausen (DE); DÄUMLER, Felix, 07368 Remptendorf (DE); EISMANN, Christopher, 90530 Wendelstein (DE); GRIESSL, Johannes, 91301 Forchheim (DE); HOLWEG, Johann, 90513 Zirndorf (DE); HUBER, Adrian, 90765 Fürth (DE); KAPELKE, Martin, 90429 Nürnberg (DE); RUDEK, Michael, 90455 Nürnberg (DE); SCHRAMMEL, Christian, 90559 Burgthann (DE); STOLTZE, Torsten, 91074 Herzogenaurach (DE); WAHLE, Marcus, 90587 Veitsbronn (DE); WEBER, Johannes, 91054 Erlangen (DE)
(86) Internationale Anmeldenummer: PCT/EP2018/066230
(87) Internationale Veröffentlichungsnummer: WO 2019/242843

(56) Entgegenhaltungen:
- WO-A1-2008/074275
- WO-A1-2017/088922
- WO-A2-2004/093276
- CN-A- 102 185 266
- US-A1- 2017 129 423

## Beschreibung

Die Erfindung betrifft einen modularen Multilevel-Stromrichter mit mehreren Stromrichtermodulen, die jeweils eine Gleichspannungsquelle, beispielsweise einen Kondensator, aufweisen.

Um Wartungsarbeiten an einem solchen Stromrichter auszuführen, muss vorher sichergestellt sein, dass die Gleichspannungsquellen entladen sind und mindestens ein Pol jeder Gleichspannungsquelle auf Erdpotential liegt. Beispielsweise wird die Potentialanbindung über eine hohe Anzahl in Reihe geschalteter Schiebekontakte oder durch von Hand eingelegte Überbrückungsseile erreicht. Die hohe Anzahl von in Reihe geschalteten Kontakten kann bei Ausfall von zwei Kontakten jedoch zu einer Unterbrechung des Erdpotentials führen.

Aus der internationalen Patentanmeldung WO 2008/074275 A1 ist eine Erdungsvorrichtung mit einem aufwickelbaren Überbrückungsseil bekannt, welches einen Isolierabschnitt und einen Erdungsabschnitt aufweist. Bei Bedarf wird der Erdungsabschnitt über die Stromrichtermodule gezogen.

Der Erfindung liegt die Aufgabe zugrunde, ein Potentialausgleichsystem für einen modularen Multilevel-Stromrichter mit mehreren Stromrichtermodulen, die jeweils eine Gleichspannungsquelle aufweisen, anzugeben, das die Anbindbarkeit der Gleichspannungsquellen an ein Erdpotential verbessert.

Die Aufgabe wird erfindungsgemäß durch ein Potentialausgleichsystem mit den Merkmalen des Anspruchs 1 und einen modularen Multilevel-Stromrichter mit den Merkmalen des Anspruchs 9 gelöst.

Vorteilhafte Ausgestaltungen der Erfindung sind Gegenstand der Unteransprüche.

Ein erfindungsgemäßes Potentialausgleichsystem für einen modularen Multilevel-Stromrichter, der mehrere Stromrichtermodule (3) mit jeweils einer Gleichspannungsquelle (13) aufweist, umfasst Polkontakte, die jeweils mit einem Pol einer Gleichspannungsquelle elektrisch verbunden sind, und wenigstens ein elektrisch leitfähiges Kontaktierelement, das zwischen einer ersten Endlage, in der es von den Stromrichtermodulen elektrisch getrennt ist, und einer zweiten Endlage, in der es Polkontakte verschiedener Gleichspannungsquellen kontaktiert und auf ein Erdpotential legbar ist, bewegbar ist, beispielsweise durch einen manuellen, mechanischen oder elektrischen Antrieb.

Bei einem erfindungsgemäßen Potentialausgleichsystem für einen modularen Multilevel-Stromrichter können also Pole von Gleichspannungsquellen verschiedener Stromrichtermodule des Stromrichters auf ein Erdpotential gelegt werden, indem mit den Polen jeweils verbundene Polkontakte durch ein Kontaktierelement elektrisch miteinander verbunden werden und das Kontaktierelement auf das Erdpotential gelegt wird. Dadurch bleiben bei einem Ausfall einzelner Polkontakte die über die anderen Polkontakte mit dem Kontaktierelement verbundenen Gleichspannungsquellen an das Erdpotential angeschlossen. Dies erhöht vorteilhaft die Sicherheit der Anbindung vieler Gleichspannungsquellen an das Erdpotential gegenüber einer Anbindung über eine Vielzahl in Reihe geschalteter Kontakte.

Die Erfindung sieht vor, dass wenigstens ein Kontaktierelement eine elektrische Abschirmung zum Abschirmen mehrerer Stromrichtermodule ist, die um eine Drehachse zwischen der ersten Endlage und der zweiten Endlage drehbar ist. Beispielsweise weist die Abschirmung ein Abschirmrohr auf, von dem wenigstens ein Abschirmkontakt absteht, der in der zweiten Endlage der Abschirmung wenigstens einen Polkontakt kontaktiert, und die Drehachse der Abschirmung ist eine Längsachse des Abschirmrohrs. Beispielsweise ist wenigstens ein Abschirmkontakt als ein an dem Abschirmrohr angeordneter Henkel ausgebildet, der in der zweiten Endlage der Abschirmung mehrere Polkontakte kontaktiert. Die Abschirmung ist beispielsweise aus Aluminium gefertigt.

Die vorgenannten Ausgestaltungen der Erfindung nutzen eine in der Regel ohnehin erforderliche Abschirmung von Stromrichtermodulen als ein Kontaktierelement beziehungsweise versehen das Kontaktierelement mit einer Abschirmfunktion. Dadurch wird der Material- und Konstruktionsaufwand gegenüber separat ausgeführten Abschirmungen und Kontaktierelementen vorteilhaft reduziert.

Eine weitere Ausgestaltung der Erfindung sieht vor, dass wenigstens ein Kontaktierelement ein elektrisch leitfähiges Kontaktseil, beispielsweise ein Kupferseil, ist, das an einem elektrisch isolierenden, über Polkontakte verschiedener Gleichspannungsquellen geführten Führungsseil führbar ist, in der ersten Endlage an keinem Polkontakt anliegt und in der zweiten Endlage an den Polkontakten, über die das Führungsseil geführt ist, anliegt. Beispielsweise ist das Führungsseil über eine erste Seiltrommel geführt, das Kontaktseil ist über eine zweite Seiltrommel geführt und beide Seiltrommeln sind auf einer manuell, mechanisch oder elektrisch antreibbaren Antriebswelle montiert.

Ein als Kontaktseil ausgebildetes Kontaktierelement ermöglicht eine der räumlichen Verteilung der Polkontakte flexibel anpassbare elektrische Verbindung der Polkontakte, insbesondere auch eine Verbindung räumlich relativ weit voneinander entfernter Polkontakte.

Ein erfindungsgemäßer modularer Multilevel-Stromrichter, insbesondere ein selbstgeführter modularer Multilevel-Stromrichter, umfasst mehrere Stromrichtermodule mit jeweils einer Gleichspannungsquelle, die beispielsweise als ein Kondensator oder eine elektrische Verschaltung mehrerer Kondensatoren ausgebildet ist, und ein erfindungsgemäßes Potentialausgleichsystem. Die Vorteile eines derartigen Stromrichters ergeben sich aus den oben bereits genannten Vorteilen eines erfindungsgemäßen Potentialausgleichsystems und werden daher hier nicht noch einmal aufgeführt.

Bei einer weiteren Ausgestaltung der Erfindung weist der Stromrichter mehrere Modulgruppen auf, die jeweils mehrere Stromrichtermodule mit jeweils wenigstens einem Polkontakt aufweisen. Für jede Modulgruppe weist das Potentialausgleichsystem ein Kontaktierelement auf, das in seiner zweiten Endlage alle Polkontakte der Modulgruppe kontaktiert. Diese Ausgestaltung der Erfindung berücksichtigt, dass die Stromrichtermodule eines modularen Multilevel-Stromrichters häufig mehrere Modulgruppen bilden, die beispielsweise räumlich voneinander beabstandet angeordnet sind. In diesem Fall kann es vorteilhaft sein, für jede Modulgruppe ein Kontaktierelement vorzusehen. Dabei kann vorgesehen sein, dass alle Kontaktierelemente in ihren zweiten Endlagen elektrisch miteinander verbunden sind. Dies vereinfacht vorteilhaft die Anbindung an das Erdpotential. Ferner kann ein gemeinsamer Antrieb vorgesehen sein, mit dem alle Kontaktierelemente gleichzeitig antreibbar sind. Dadurch kann einerseits der Kosten- und Materialaufwand für das Bewegen der Kontaktierelemente reduziert werden und andererseits können die Bewegungen der Kontaktierelemente einfacher synchronisiert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines modularen Multilevel-Stromrichters,
FIG 2 als Abschirmungen ausgebildete Kontaktierelemente und einen Antrieb zum Bewegen der Abschirmungen,
FIG 3 eine perspektivische Darstellung von Polkontakten und eines als Abschirmung ausgebildeten Kontaktierelements in einer ersten Endlage der Abschirmung,
FIG 4 eine perspektivische Darstellung der in Figur 3 gezeigten Polkontakte und der Abschirmung in einer zweiten Endlage der Abschirmung,
FIG 5 Polkontakte und ein als ein Kontaktseil ausgebildetes Kontaktierelement, das an einem Führungsseil geführt wird, in einer Zwischenlage des Kontaktseils,
FIG 6 die in Figur 5 gezeigten Polkontakte und das an dem Führungsseil geführte Kontaktseil in einer zweiten Endlage des Kontaktseils.

Einander entsprechende Teile sind in den Figuren mit den gleichen Bezugszeichen versehen.

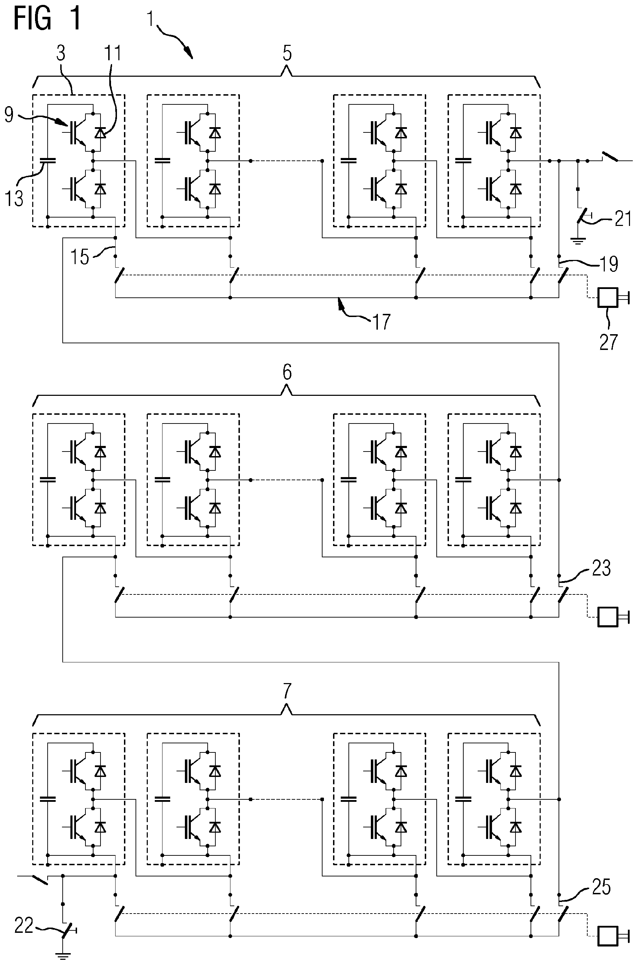

Figur 1 zeigt einen Schaltplan eines selbstgeführten modularen Multilevel-Stromrichters 1. Der Stromrichter 1 weist mehrere im Normalbetrieb des Stromrichters 1 in Reihe geschaltete Stromrichtermodule 3 auf, von denen nur einige dargestellt sind. Die Stromrichtermodule 3 bilden drei übereinander angeordnete Modulgruppen 5 bis 7. Ferner weist der Stromrichter 1 ein erfindungsgemäßes Potentialausgleichsystem auf, das für jede Modulgruppe 5 bis 7 ein elektrisch leitfähiges Kontaktierelement 17 und für jedes Stromrichtermodul 3 einen Polkontakt 15 aufweist.

Jedes Stromrichtermodul 3 weist eine Halbbrücke aus Halbleiterschaltern 9 auf, die beispielsweise jeweils als ein Bipolartransistor mit isoliertem Gate (IGBT = Insulated-Gate Bipolar Transistor) ausgebildet sind, zu dem eine Freilaufdiode 11 antiparallel geschaltet ist. Ferner weist jedes Stromrichtermodul 3 eine Gleichspannungsquelle 13 auf, die als ein Kondensator ausgebildet ist. Ein Pol der Gleichspannungsquelle 13 ist mit dem Polkontakt 15 des Stromrichtermoduls 3 elektrisch verbunden, über den der Pol elektrisch kontaktierbar ist.

Das Kontaktierelement 17 jeder Modulgruppe 5 bis 7 ist zwischen einer ersten Endlage, in der es von den Stromrichtermodulen 3 der Modulgruppe 5 bis 7 elektrisch getrennt ist, und einer zweiten Endlage, in der es alle Polkontakte 15 der Modulgruppe 5 bis 7 kontaktiert und die Gleichspannungsquellen 13 der Stromrichtermodule 3 der Modulgruppe 5 bis 7 parallel schaltet, bewegbar. Das Kontaktierelement 17 einer ersten Modulgruppe 5 kontaktiert in seiner zweiten Endlage zusätzlich einen Erdungskontakt 19, an den über einen ersten Erdungsschalter 21 ein Erdpotential legbar ist. Das Kontaktierelement 17 einer zweiten Modulgruppe 6 kontaktiert in seiner zweiten Endlage zusätzlich einen ersten Verbindungskontakt 23, der elektrisch mit einem Polkontakt 15 der ersten Modulgruppe 5 verbunden ist. Das Kontaktierelement 17 der dritten Modulgruppe 7 kontaktiert in seiner zweiten Endlage zusätzlich einen zweiten Verbindungskontakt 25, der elektrisch mit einem Polkontakt 15 der zweiten Modulgruppe 6 verbunden ist. An einen Polkontakt 15 der dritten Modulgruppe 7 ist über einen zweiten Erdungsschalter 22 das Erdpotential legbar. Wenn sich alle Kontaktierelemente 17 in ihrer zweiten Endlage befinden, ist daher durch Schließen wenigstens eines Erdungsschalters 21, 22 das Erdpotential an alle Polkontakte 15 legbar.

Jedes Kontaktierelement 17 ist über einen Antrieb 27 zwischen seinen beiden Endlagen bewegbar. Die Antriebe 27 der Kontaktierelemente 17 können auch als ein gemeinsamer Antrieb 27 für alle Kontaktierelemente 17 ausgeführt sein.

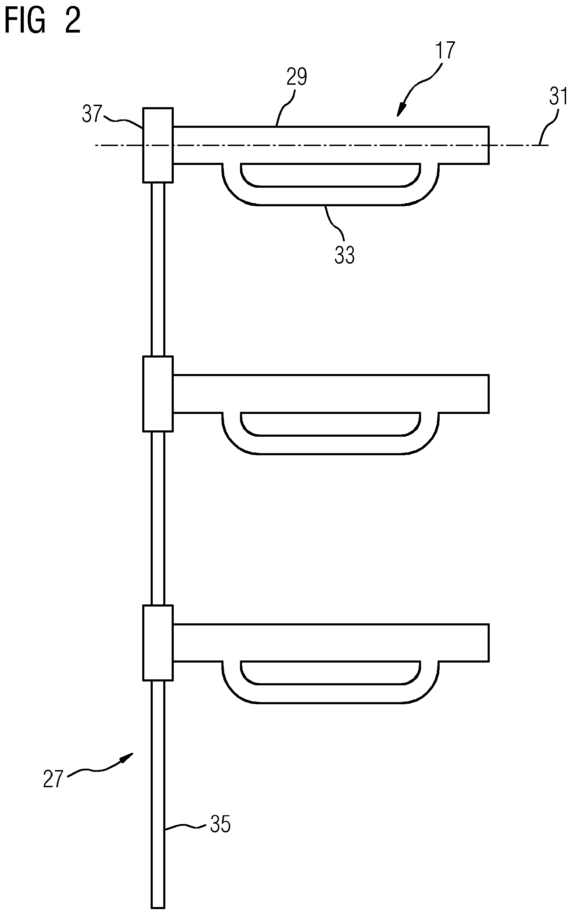

Figur 2 zeigt als Abschirmungen ausgebildete Kontaktierelemente 17 und einen gemeinsamen Antrieb 27 für die Kontaktierelemente 17. Jede Abschirmung ist zum Abschirmen der Stromrichtermodule 3 einer Modulgruppe 5 bis 7 ausgebildet.

Jede Abschirmung weist ein Abschirmrohr 29 auf und ist um eine Drehachse 31, die eine Längsachse des Abschirmrohrs 29 ist, zwischen seinen beiden Endlagen drehbar. Von jedem Abschirmrohr 29 steht ein Abschirmkontakt 33 ab, der als ein an dem Abschirmrohr 29 angeordneter Henkel ausgebildet ist. Die Abschirmungen sind beispielsweise aus Aluminium gefertigt.

Der Antrieb 27 umfasst eine Antriebsstange 35, die manuell, mechanisch oder elektrisch angetrieben um ihre Längsachse drehbar ist, und für jedes Abschirmrohr 29 ein Getriebeelement 37, das aus einer Drehung der Antriebsstange 35 um deren Längsachse eine Drehung des Abschirmrohrs 29 um die Drehachse 31 bewirkt. Beispielsweise bilden die Antriebsstange 35 und jedes Getriebeelement 37 ein Schneckengetriebe, wobei die Antriebsstange 35 als Schnecke des Schneckengetriebes ausgebildet ist und das Getriebeelement 37 als Schneckenrad des Schneckengetriebes ausgebildet ist.

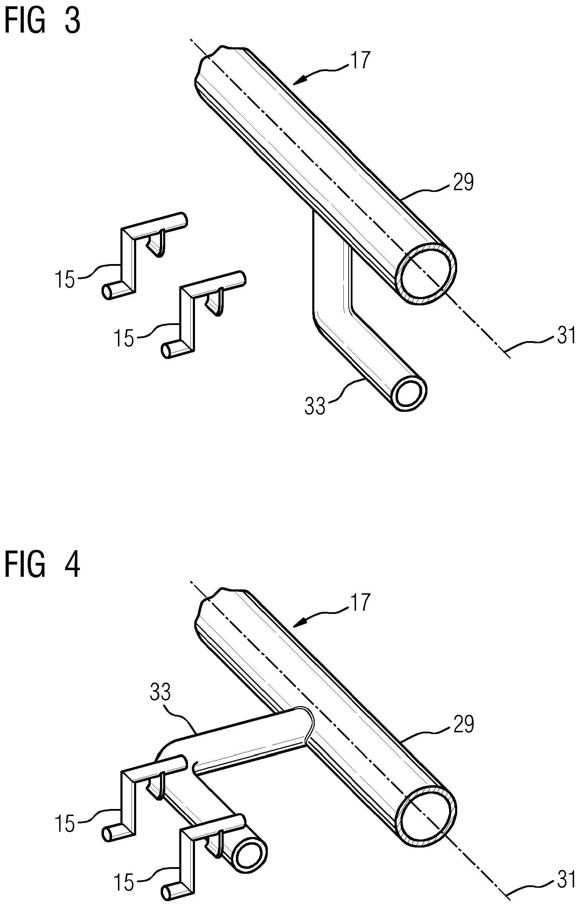

Die Figuren 3 und 4 zeigen zwei Polkontakte 15 einer Modulgruppe 5 bis 7 und einen Abschnitt einer dazu gehörenden Abschirmung in den beiden Endlagen der Abschirmung, wobei Figur 3 die erste Endlage zeigt und Figur 4 die zweite Endlage zeigt. Die Polkontakte 15 der Modulgruppe 5 bis 7 sind entlang einer Parallelen zu der Drehachse 31 der Abschirmung nebeneinander angeordnet. In der ersten Endlage der Abschirmung ist der Abschirmkontakt 33 der Abschirmung von den Polkontakten 15 beabstandet. In der zweiten Endlage ist das Abschirmrohr 29 gegenüber der ersten Endlage um etwa 90 Grad um die Drehachse 31 gedreht und der Abschirmkontakt 33 der Abschirmung liegt an den Polkontakten 15 an.

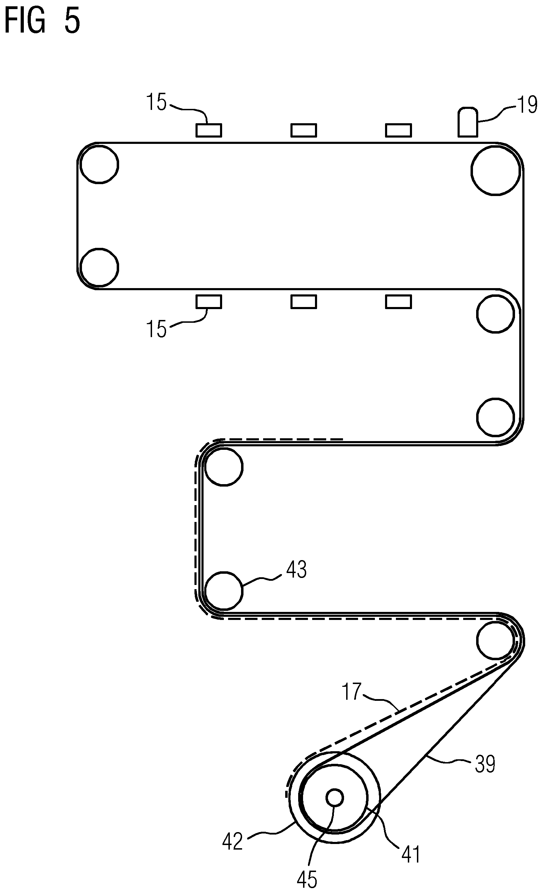

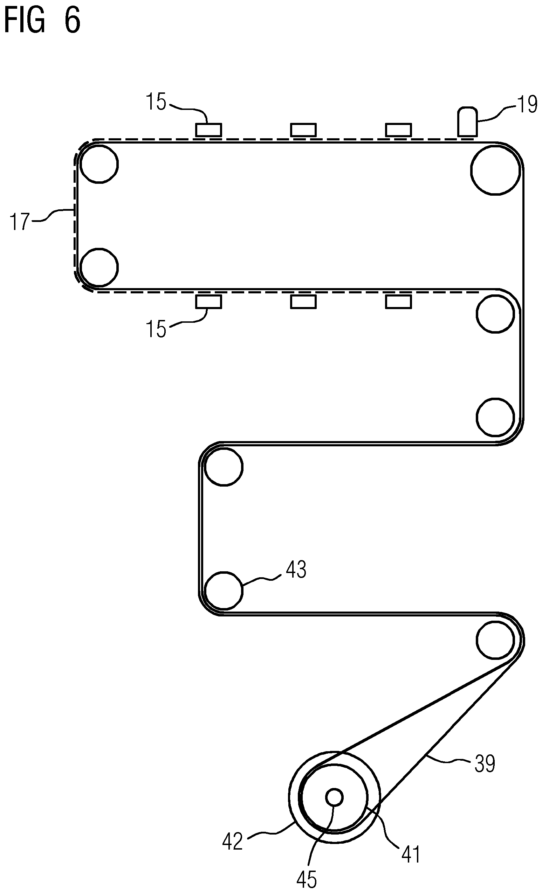

Die Figuren 5 und 6 zeigen Polkontakte 15 und ein als ein elektrisch leitfähiges Kontaktseil ausgebildetes Kontaktierelement 17, das an einem elektrisch isolierenden Führungsseil 39 geführt wird.

Das Führungsseil 39 ist über eine erste Seiltrommel 41, Umlenkrollen 43, die Polkontakte 15 und einen Erdungskontakt 19 geführt.

Das Kontaktseil ist in seiner ersten Endlage auf einer zweiten Seiltrommel 42 aufgewickelt und wird mit dem Führungsseil 39 von der ersten Endlage über eine in Figur 5 gezeigte Zwischenlage in die in Figur 6 gezeigte zweite Endlage gezogen, in der es an allen Polkontakten 15 und dem Erdungskontakt 19 anliegt. Das Kontaktseil ist beispielsweise aus Kupfer gefertigt.

Die Seiltrommeln 41, 42 sind auf einer Antriebswelle 45 montiert, die manuell, mechanisch oder elektrisch antreibbar ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Stromrichter
- 3: Stromrichtermodul
- 5 bis 7: Modulgruppe
- 9: Halbleiterschalter
- 11: Freilaufdiode
- 13: Gleichspannungsquelle
- 15: Polkontakt
- 17: Kontaktierelement
- 19: Erdungskontakt
- 21, 22: Erdungsschalter
- 23, 25: Verbindungskontakt
- 27: Antrieb
- 29: Abschirmrohr
- 31: Drehachse
- 33: Abschirmkontakt
- 35: Antriebsstange
- 37: Getriebeelement
- 39: Führungsseil
- 41, 42: Seiltrommel
- 43: Umlenkrolle
- 45: Antriebswelle

## Patentansprüche

1. Potentialausgleichsystem für einen modularen Multilevel-Stromrichter (1), der mehrere Stromrichtermodule (3) mit jeweils einer Gleichspannungsquelle (13) aufweist, das Potentialausgleichsystem umfassend
- Polkontakte (15), die jeweils mit einem Pol einer Gleichspannungsquelle (13) elektrisch verbunden sind, und
- wenigstens ein elektrisch leitfähiges Kontaktierelement (17), das zwischen einer ersten Endlage, in der es von den Stromrichtermodulen (3) elektrisch getrennt ist, und einer zweiten Endlage, in der es Polkontakte (15) verschiedener Gleichspannungsquellen (13) kontaktiert und auf ein Erdpotential legbar ist, bewegbar ist,
**dadurch gekennzeichnet, dass**
wenigstens eines der Kontaktierelemente (17) eine elektrische Abschirmung zum Abschirmen mehrerer Stromrichtermodule (3) ist, die um eine Drehachse (31) zwischen der ersten Endlage und der zweiten Endlage drehbar ist.

2. Potentialausgleichsystem nach Anspruch 1 mit einem manuellen, mechanischen oder elektrischen Antrieb (27) zum Bewegen des wenigstens einen Kontaktierelements (17) zwischen seinen beiden Endlagen.

3. Potentialausgleichsystem nach Anspruch 1 oder 2, wobei die Abschirmung ein Abschirmrohr (29) aufweist, von dem wenigstens ein Abschirmkontakt (33) absteht, der in der zweiten Endlage der Abschirmung wenigstens einen Polkontakt (15) kontaktiert, und die Drehachse (31) der Abschirmung eine Längsachse des Abschirmrohrs (29) ist.

4. Potentialausgleichsystem nach Anspruch 3, wobei wenigstens ein Abschirmkontakt (33) als ein an dem Abschirmrohr (29) angeordneter Henkel ausgebildet ist, der in der zweiten Endlage der Abschirmung mehrere Polkontakte (15) kontaktiert.

5. Potentialausgleichsystem nach einem der vorhergehenden Ansprüche, wobei die Abschirmung aus Aluminium gefertigt ist.

6. Potentialausgleichsystem nach einem der vorhergehenden Ansprüche, wobei wenigstens ein Kontaktierelement (17) ein elektrisch leitfähiges Kontaktseil ist, das an einem elektrisch isolierenden, über Polkontakte (15) verschiedener Gleichspannungsquellen (13) geführten Führungsseil (39) führbar ist, in der ersten Endlage an keinem Polkontakt (15) anliegt und in der zweiten Endlage an den Polkontakten (15), über die das Führungsseil (39) geführt ist, anliegt.

7. Potentialausgleichsystem nach Anspruch 6, wobei das Kontaktseil aus Kupfer gefertigt ist.

8. Potentialausgleichsystem nach Anspruch 6 oder 7, wobei das Führungsseil (39) über eine erste Seiltrommel (41) geführt ist, das Kontaktseil über eine zweite Seiltrommel (42) geführt ist und beide Seiltrommeln (41, 42) auf einer manuell, mechanisch oder elektrisch antreibbaren Antriebswelle (45) montiert sind.

9. Modularer Multilevel-Stromrichter (1), umfassend
- mehrere Stromrichtermodule (3) mit jeweils einer Gleichspannungsquelle (13) und
- ein gemäß einem der vorhergehenden Ansprüche ausgebildetes Potentialausgleichsystem.

10. Modularer Multilevel-Stromrichter (1) nach Anspruch 9, wobei jede Gleichspannungsquelle (13) als ein Kondensator oder eine elektrische Verschaltung mehrerer Kondensatoren ausgebildet ist.

11. Modularer Multilevel-Stromrichter (1) nach Anspruch 9 oder 10, der mehrere Modulgruppen (5 bis 7) aufweist, die jeweils mehrere Stromrichtermodule (3) mit jeweils wenigstens einem Polkontakt (15) aufweisen, und dessen Potentialausgleichsystem für jede Modulgruppe (5 bis 7) ein Kontaktierelement (17) aufweist, das in seiner zweiten Endlage alle Polkontakte (15) der Modulgruppe (5 bis 7) kontaktiert.

12. Modularer Multilevel-Stromrichter (1) nach Anspruch 11, wobei alle Kontaktierelemente (17) in ihren zweiten Endlagen elektrisch miteinander verbunden sind.

13. Modularer Multilevel-Stromrichter (1) nach Anspruch 11 oder 12 mit einem gemeinsamen Antrieb (27), mit dem alle Kontaktierelemente (17) gleichzeitig antreibbar sind.

14. Modularer Multilevel-Stromrichter (1) nach einem der Ansprüche 9 bis 13, der als ein selbstgeführter Stromrichter ausgebildet ist.

## Claims

1. Potential equalization system for a modular multilevel power converter (1) that has a plurality of power converter modules (3), each having a DC voltage source (13), the potential equalization system comprising:
- pole contacts (15), each of which is electrically connected to one pole of a DC voltage source (13), and
- at least one electrically conductive contacting element (17), which can be moved between a first end position, in which it is electrically disconnected from the power converter modules (3), and a second end position, in which it contacts pole contacts (15) of different DC voltage sources (13) and can be connected to an earth potential,
**characterized in that**
at least one of the contacting elements (17) is an electrical screen for screening a plurality of power converter modules (3) that can be rotated about an axis of rotation (31) between the first end position and the second end position.

2. Potential equalization system according to Claim 1, having a manual, mechanical or electrical drive (27) for moving the at least one contacting element (17) between its two end positions.

3. Potential equalization system according to Claim 1 or 2, wherein the screen has a screen tube (29) from which at least one screen contact (33) protrudes which, in the second end position of the screen, contacts at least one pole contact (15), and the axis of rotation (31) of the screen is a longitudinal axis of the screen tube (29).

4. Potential equalization system according to Claim 3, wherein at least one screen contact (33) is designed as a handle arranged at the screen tube (29) that contacts a plurality of pole contacts (15) when in the second end position of the screen.

5. Potential equalization system according to one of the preceding claims, wherein the screen is manufactured from aluminium.

6. Potential equalization system according to one of the preceding claims, wherein at least one contacting element (17) is an electrically conductive contact cable that can be guided by an electrically insulating guide cable (39) that is guided via pole contacts (15) of different DC voltage sources (13), does not bear in the first end position on any pole contact (15) and bears in the second end position on the pole contacts (15), via which the guide cable (39) is guided.

7. Potential equalization system according to Claim 6, wherein the contact cable is manufactured from copper.

8. Potential equalization system according to Claim 6 or 7, wherein the guide cable (39) is guided by a first cable drum (41), the contact cable is guided by a second cable drum (42), and the two cable drums (41, 42) are mounted on a drive shaft (45) that can be driven manually, mechanically or electrically.

9. Modular multilevel power converter (1), comprising:
- a plurality of power converter modules (3), each having a DC voltage source (13) and
- a potential equalization system designed according to one of the preceding claims.

10. Modular multilevel power converter (1) according to Claim 9, wherein each DC voltage source (13) is designed as a capacitor or as an electrical interconnection of a plurality of capacitors.

11. Modular multilevel power converter (1) according to Claim 9 or 10, which has a plurality of module groups (5 to 7) that each have a plurality of power converter modules (3) each having at least one pole contact (15), and whose potential equalization system has a contacting element (17) for each module group (5 to 7) which, in its second end position, contacts all the pole contacts (15) of the module group (5 to 7) .

12. Modular multilevel power converter (1) according to Claim 11, wherein all the contacting elements (17) are electrically connected to one another in their second end positions.

13. Modular multilevel power converter (1) according to Claim 11 or 12, having a common drive (27) with which all the contacting elements (17) can be driven simultaneously.

14. Modular multilevel power converter (1) according to one of Claims 9 to 13, which is designed as a self-commutated power converter.

## Revendications

1. Système d'équilibrage du potentiel d'un convertisseur (1) modulaire à plusieurs niveaux, qui a plusieurs modules (3) de convertisseur ayant chacun une source (13) de tension continue, le système d'équilibrage du potentiel comprenant
- des contacts (15) polaires, qui sont connectés électriquement chacun à un pôle d'une source (13) de tension continue, et
- au moins un élément (17) de mise en contact conducteur de l'électricité, qui est mobile entre une première position d'extrémité, dans laquelle il est séparé électriquement des modules (3) du convertisseur, et une deuxième position d'extrémité, dans laquelle il est en contact avec des contacts (15) polaires de diverses sources (13) de tension continue et peut être mis au potentiel de terre,
**caractérisé en ce que**
au moins l'un des éléments (17) de mise en contact est un blindage électrique pour le blindage de plusieurs modules (3) de convertisseur, qui peut tourner autour d'un axe (31) de rotation entre la première position d'extrémité et la deuxième position d'extrémité.

2. Système d'équilibrage du potentiel suivant la revendication 1, comprenant un entraînement (27) manuel, mécanique ou électrique de déplacement du au moins un élément (17) de mise en contact entre ses deux positions d'extrémité.

3. Système d'équilibrage de potentiel suivant la revendication 1 ou 2, dans lequel le blindage a un tube (29) de blindage dont fait saillie au moins un contact (33) de blindage, qui, dans la deuxième position d'extrémité du blindage, est en contact avec au moins un contact (15) polaire et l'axe (31) de rotation du blindage est un axe longitudinal du tube (29) de blindage.

4. Système d'équilibrage du potentiel suivant la revendication 3, dans lequel au moins un contact (33) de blindage est constitué sous la forme d'une anse, qui est disposée sur le tube (29) de blindage et qui est en contact avec plusieurs contacts (15) polaires dans la deuxième position d'extrémité du blindage.

5. Système d'équilibrage du potentiel suivant l'une des revendications précédentes, dans lequel le blindage est en aluminium.

6. Système d'équilibrage du potentiel suivant l'une des revendications précédentes, dans lequel au moins un élément (17) de mise en contact est un câble de contact conducteur de l'électricité, qui peut passer sur un câble (39) de guidage, isolant électriquement et passant sur des contacts (15) polaires de diverses sources (13) de tension continue, ne s'applique pas à un contact (15) polaire dans la première position d'extrémité et s'applique dans la deuxième position d'extrémité aux contacts (15) polaires, sur lesquels passe le câble (39) de guidage.

7. Système d'équilibrage du potentiel suivant la revendication 6, dans lequel le câble de contact est en cuivre.

8. Système d'équilibrage du potentiel suivant la revendication 6 ou 7, dans lequel le câble (39) de guidage passe sur un premier tambour (41), le câble de contact passe sur un deuxième tambour (42) et les deux tambours (41, 42) sont montés sur un arbre (45) d'entraînement pouvant être entraîné manuellement, mécaniquement ou électriquement.

9. Convertisseur (1) modulaire à plusieurs niveaux, comprenant
- plusieurs modules (3) de convertisseur ayant chacun une source (13) de tension continue et
- un système d'équilibrage du potentiel constitué suivant l'une des revendications précédentes.

10. Convertisseur (1) modulaire à plusieurs niveaux suivant la revendication 9, dans lequel chaque source (13) de tension continue est constituée sous la forme d'un condensateur ou d'un montage électrique de plusieurs condensateurs.

11. Convertisseur (1) suivant la revendication 9 ou 10, qui a plusieurs groupes (5 à 7) de modules, qui ont chacun plusieurs modules (3) de convertisseurs ayant chacun au moins un contact (15) polaire, et dont le système d'équilibrage du potentiel de chaque groupe (5 à 7) de modules a un élément (17) de mise en contact, qui est en contact, dans sa deuxième position d'extrémité, avec tous les contacts (15) polaires du groupe (5 à 7) de modules.

12. Convertisseur (1) suivant la revendication 11, dans lequel tous les éléments (17) de mise en contact sont connectés électriquement entre eux dans leur deuxième position d'extrémité.

13. Convertisseur (1) suivant la revendication 11 ou 12 comprenant un entraînement (27) commun, par lequel tous les éléments (17) de mise en contact peuvent être entraînés en même temps.

14. Convertisseur (1) suivant l'une des revendications 9 à 13, qui est constitué en convertisseur à commutation autonome.
